# EUROPEAN PATENT SPECIFICATION

(11) **EP 1 414 190 B1**
(45) Date of publication and mention of the grant of the patent: **07.03.2007**
(21) Application number: 02360289.9
(22) Date of filing: 22.10.2002
(51) Int. Cl.: H04L 12/28

(54) **Method and system for informing a user about a WLAN accessibility**
Verfahren und System zur Information über eine WLAN-Zugänglichkeit an einen Benutzter
Méthode et système pour informer un utilisateur de l'accessibilité d'une WLAN

(43) Date of publication of application: 28.04.2004
(73) Proprietor: ALCATEL, 75008 Paris (FR)
(72) Inventor: Lauriol, Jean-Michel, 67640 Fegersheim (FR)
(74) Representative: Rausch, Gabriele

(56) References cited:
- WO-A-02/078381
- GB-A- 2 369 964
- US-A1- 2001 041 568

## Description

The present invention is related to the field of telecommunications, more particularly to the detection procedures of and to the accessing procedures to wireless local area networks (WLANs), and concerns a method for informing of the possibility to access to a WLAN, and a system able to perform such a method.

Today, WLAN technology is rapidly spreading and is more and more considered in Public environments. WLAN access points are being deployed in public hotspots such as airports, hotels, train stations, conference centers or similar.

They allow a mobile WLAN user to access Internet services or Intranet company services through PDA or laptop computers equipped with a WLAN card.

These Public WLANs can be managed by WISP (Wireless Internet Service Provider) and/or Mobile Operator, even the site owner with the dedicated agreements between these business entities.

The problem today is that only few WLAN areas are deployed with limited radio coverage area. When a mobile user arrives in a public area, he or she does not know if a public WLAN access exists and where it could be located in this hotspot.

The technical problem to be solved by the invention is to signal/notify the mobile user that public or non public WLAN services are available in a specific area.

Indeed, the solution nowadays for the mobile user is to know exactly in which public areas WLANs are deployed in the world through documentation paper lists. It needs therefore a frequent search effort and a huge accuracy since, for example, only a restricted areas are covered, such as within a airport (dedicated lounges, coffee bars,...).

WO 01/01711 describes a partial solution to the problem exposed beforehand, wherein a teleoperator notifies a user through a SMS message that a WLAN is available near said user. This detection and notification is performed, automatically or on demand, using location services.

Nevertheless, this notification is not carried out in real time and uses stored information, without verifying the real existence of the WLAN, nor the availability of said latter for the concerned user.

The purpose of the present invention is to overcome these drawbacks.

To this effect, the present invention concerns a method for informing a person that he or she can access to a WLAN, said person carrying or being associated with a mobile data terminal and a radiotelephone terminal, method characterised in that it consists in:
- detecting the presence of the WLAN, by receiving identity or presence signals broadcasted by a or the radio access point of the considered WLAN, with a radio receiver associated to or integrated in said mobile data terminal, said radio receiver being adapted and susceptible to receive radio signals broadcasted by a WLAN, and, scanning for an available WLAN being based on detection of a or the network identifier broadcasted by the or a WLAN to which the concerned person has suscribed and
- sending a signal or a message, via a short range radio transmitter, to said radiotelephone terminal equipped with an adapted receiver, in order to inform said person that he or she can access to said WLAN.

Beforehand, said mobile data terminal is put in a mode (preferably with low power consumption) in which it scans periodically, preferably at (a) given frequency(ies) or within a given frequency range, for the existence of an identity or a presence signal from a WLAN for which the considered person is a potential user.

Advantageously, the scanning for an available WLAN is based on detection of a or the network identifier broadcasted by the or a WLAN to which the concerned person has subscribed.

According to an other feature of the invention, a successful detection of a WLAN to which the concerned person has subscribed can also be notified directly by the mobile data terminal, by means of an audio signal and/or a visual message displayed on its screen.

In relation with a preferred embodiment, the mobile data terminal and the radiotelephone terminal are equipped with wireless personal area network interfaces, such as so-called IrDa and Bluetooth interfaces.

The present invention also concerns a portable communication system able to inform a person that he or she can access to a WLAN, said system comprising a mobile data terminal and a radiotelephone terminal, characterised in that said mobile data terminal is associated with or integrates, on the one hand, a radio receiver which is adapted and susceptible to receive identity or presence radio signals broadcasted by a or the radio access point of the considered WLAN and, on the other hand, a short range radio transmitter, able to send a signal or a message in order to inform said person that he or she can access to said WLAN and in that said radiotelephone terminal is equipped with a receiver adapted to receive the signal or message sent by said short range transmitter of said mobile data terminal.

This system is advantageously able to perform the method described herein before.

This invention will be better understood thanks to the following description explaining a preferred embodiment of the invention as a non limitative example, in connection with the enclosed schematical drawing of a WLAN public access area, also illustrating a system performing the method according to the invention.

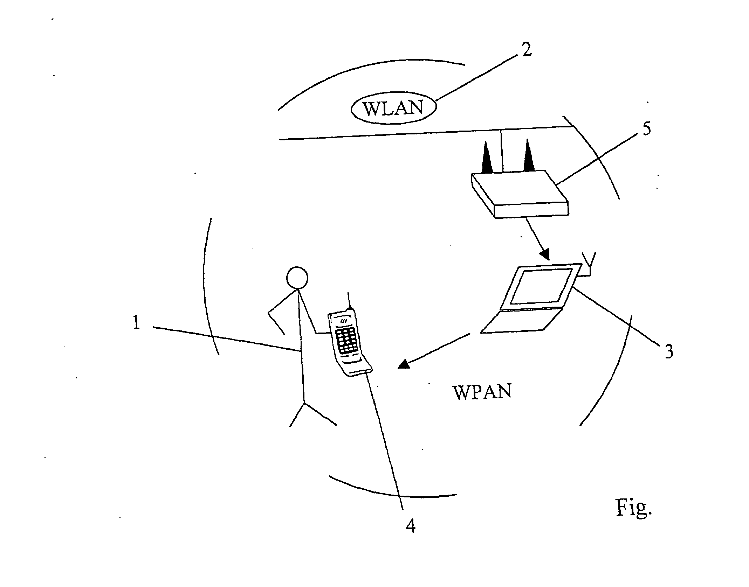

As shown on the enclosed figure, the method for informing a person 1 that he or she can access to a WLAN 2 mainly consists in:
- first detecting the presence of the WLAN 2, by receiving identity or presence signals broadcasted by a or the radio access point 5 of the considered WLAN 2, with a radio receiver associated to or integrated in said mobile data terminal 3 and which is adapted and susceptible to receive radio signals broadcasted by a WLAN, and,
- then sending a signal or a message, via a short range radio transmitter associated to said terminal 3, to said radiotelephone terminal 4 equipped with an adapted receiver, in order to inform said person 1 that he or she can access to said WLAN 2.

The mobile data terminal 3, such as a laptop computer or a PDA (Personal Digital Assistant), is in stand-by mode or in an operational mode and in these modes, the laptop/PDA scans periodically if the (public) WLAN is existing (based on detection of the subscriber Network Identifer - for example SSID in the IEEE 802.11 standard). If it exists, the laptop/PDA notifies immediately the user of the mobile phone, through the WPAN, that a real public access, associated to his subscription, is deployed and also on the laptop/PDA screen.

Thus, the user knows, without effort, that an available WLAN can be accessed from his or hers present place and can connect straigh away without any further checking.

## Claims

1. Method for informing a person that he or she can access to a WLAN, said person carrying or being associated with a mobile data terminal and a radiotelephone terminal, while the method comprises the following steps:
- detecting the presence of the WLAN (2), by receiving identity or presence signals broadcasted by a or the radio access point (5) of the considered WLAN (2), with a radio receiver associated to or integrated in said mobile data terminal (3) said radio receiver being adapted and susceptible to receive radio signals broadcasted by a WLAN,
the method being **characterized by**
- a scanning step for an available WLAN being based on detection of a or the network identifier broadcasted by the or a WLAN (2) to which the concerned person has suscribed, and
- sending a signal or a message, via a short range radio transmitter from the mobile data terminal to said radiotelephone terminal (4) equipped with an adapted receiver, in order to inform said person (1) that he or she can access to said WLAN (2).

2. Method according to claim 1, **characterised in that** it consists in putting beforehand said mobile data terminal (3) in a mode in which it scans periodically, preferably at (a) given frequency(ies) or within a given frequency range, for the existence of an identity or a presence signal from a WLAN (2) for which the considered person (1) is a potential user.

3. Method according to claims 1 or 2, **characterised in that** a successful detection of a WLAN (2) to which the concerned person (1) has suscribed is also notified directly by the mobile data terminal (3), by means of an audio signal and/or a visual message displayed on its screen.

4. Method according to anyone of claims 1 to 3, **characterised in that** the mobile data terminal (3) and the radiotelephone terminal (4) are equipped with wireless personal area network (WPAN) interfaces, such as IrDa and Bluetooth interfaces.

5. Portable communication system able to inform a person that he or she can access to a WLAN, said system comprising a mobile data terminal and a radiotelephone terminal, wherein said mobile data terminal (3) is associated with or integrates, on the one hand, a radio receiver which is adapted and susceptible to receive identity or presence radio signals broadcasted by a or the radio access point (5) of the considered WLAN (2) and, on the other hand, a short range radio transmitter, **characterized in that** the mobile data terminal is able to send a signal or a message via the short range radio transmitter in order to inform said person (1) that he or she can access to said WLAN (2) while said radiotelephone terminal (4) is equipped with a receiver adapted to receive the signal or message sent by said short range transmitter of said mobile data terminal (3), said mobile data terminal adapted for scanning for an available WLAN based on detection of a or the network identifier broadcasted by the or a WLAN (2) to which the concerned person has subscribed.

6. System according to claim 5, adapted to perform the steps of the method set in claims 1 to 4.

## Patentansprüche

1. Verfahren zum Informieren einer Person, daß sie auf ein WLAN zugreifen kann, wobei die Person ein mobiles Datenendgerät und ein Mobiltelefonendgerät trägt oder hiermit verbunden ist, während das Verfahren die folgenden Schritte umfaßt:
- Detektieren der Anwesenheit des WLAN (2) durch Empfangen von Identitäts- oder Anwesenheitssignalen, die durch einen oder den Funkzugangspunkt (5) des betrachteten WLAN (2) rundgesendet wurden, mit einem Funkempfänger, der verbunden ist mit oder integriert ist im mobilen Datenendgerät (3), wobei der Funkempfänger angepaßt und empfindlich ist, um Funksignale zu empfangen, die durch ein WLAN rundgesendet wurden,
wobei das Verfahren **gekennzeichnet ist durch**
- einen Schritt des Scannens auf ein verfügbares WLAN, der auf der Detektion einer oder der Netzkennung basiert, die **durch** das oder ein WLAN (2) rundgesendet wurde, das die betrachtete Person abonniert hat, und
- Senden eines Signals oder einer Nachricht über einen Nahbereichs-Funksender vom mobilen Datenendgerät an das Mobiltelefonendgerät (4), das mit einem angepaßten Empfänger ausgerüstet ist, um die Person (1) zu informieren, daß sie auf WLAN (2) zugreifen kann.

2. verfahren nach Anspruch 1, **dadurch gekennzeichnet, daß** es darin besteht, daß das mobile Datenendgerät (3) im voraus in einen Modus gebracht wird, in dem es periodisch, vorzugsweise bei (einer) gegebenen Frequenz(en) oder innerhalb eines gegebenen Frequenzbereichs, auf das Vorhandensein eines Identitäts- oder eines Anwesenheitssignals von einem WLAN (2) scannt, für das die betrachtete Person (1) ein potentieller Benutzer ist.

3. Verfahren nach Anspruch 1 oder 2, **dadurch gekennzeichnet, daß** eine erfolgreiche Detektion eines WLAN (2), das die betrachtete Person (1) abonniert hat, ebenfalls direkt durch das mobile Datenendgerät (3) mittels eines Audiosignals und/oder einer auf seinem Bildschirm angezeigten visuellen Nachricht benachrichtigt wird.

4. Verfahren nach einem der Ansprüche 1 bis 3, **dadurch gekennzeichnet, daß** das mobile Datenendgerät (3) und das Mobiltelefonendgerät (4) mit drahtlosen persönlichen Netzschnittstellen (WPAN-Schnittstellen) wie zum Beispiel IrDa- und Bluetooth-Schnittstellen ausgerüstet sind.

5. Tragbares Kommunikationssystem, das fähig ist, eine Person zu informieren, daß sie auf ein WLAN zugreifen kann, wobei das System umfaßt: ein mobiles Datenendgerät und ein Mobiltelefonendgerät, wobei das mobile Datenendgerät (3) einerseits verbunden ist mit oder einen Funkempfänger integriert, der angepaßt und empfindlich ist, um Identitäts- oder Anwesenheitsfunksignale zu empfangen, die durch einen oder den Funkzugangspunkt (5) des betrachteten WLAN (2) rundgesendet wurden, und andererseits einen Nahbereichs-Funksender, **dadurch gekennzeichnet, daß** das mobile Datenendgerät fähig ist, ein Signal oder Nachricht über den Nahbereichs-Funksender zu senden, um die Person (1) zu informieren, daß sie auf das WLAN (2) zugreifen kann, während das Mobiltelefonendgerät (4) mit einem Empfänger ausgerüstet ist, der angepaßt ist, um das durch den Nahbereichssender des mobilen Datenendgeräts (3) gesendete Signal oder Nachricht zu empfangen, wobei das mobile Datenendgerät für das Scannen auf ein verfügbares WLAN auf der Basis der Detektion einer oder der Netzkennung angepaßt ist, die durch das oder ein WLAN (2) rundgesendet wurde, das die betrachtete Person abonniert hat.

6. System nach Anspruch 5, das angepaßt ist, um die Schritte des in den Ansprüchen 1 bis 4 festgelegten Verfahrens durchzuführen.

## Revendications

1. Procédé pour informer une personne qu'il ou elle peut accéder à un WLAN, ladite personne transportant ou étant associée avec un terminal de données mobile et un terminal de radiotéléphonie, le procédé comprenant les étapes suivantes :
- Détection de la présence du WLAN (2) en recevant des signaux d'identité ou de présence diffusés par un ou le point d'accès radioélectrique (5) du WLAN (2) concerné avec un récepteur radioélectrique associé audit terminal de données mobile (3) ou intégré dans celui-ci, ledit récepteur radioélectrique étant conçu et susceptible de recevoir des signaux radioélectriques diffusés par un WLAN
le procédé étant **caractérisé par**
- Une étape de balayage à la recherche d'un WLAN disponible en se basant sur la détection d'un ou de l'identifiant de réseau diffusé par le ou un WLAN (2) auquel la personne concernée est abonnée et
- Envoi d'un signal ou d'un message par le biais d'un émetteur radioélectrique à courte portée depuis le terminal de données mobile vers ledit terminal de radiotéléphonie (4) équipé d'un récepteur adapté afin d'informer ladite personne (1) qu'il ou elle peut accéder audit WLAN (2).

2. Procédé selon la revendication 1, **caractérisé en ce qu'**il consiste à placer préalablement ledit terminal de données mobile (3) dans un mode dans lequel il balaye périodiquement, de préférence à (une) des fréquence(s) donnée(s) ou dans une plage de fréquences donnée, à la recherche de l'existence d'un signal d'identité ou de présence d'un WLAN (2) dont la personne (1) concernée est un utilisateur potentiel.

3. Procédé selon la revendication 1 ou 2, **caractérisé en ce qu'**une détection réussie d'un WLAN (2) auquel la personne (1) concernée est abonnée est également notifiée directement par le terminal de données mobile (3), au moyen d'un signal audio et/ou d'un message visuel affiché sur son écran.

4. Procédé selon l'une quelconque des revendications 1 à 3, **caractérisé en ce que** le terminal de données mobile (3) et le terminal de radiotéléphonie (4) sont équipés d'interfaces de réseau personnel sans fil (WPAN) telles que des interfaces IrDa et Bluetooth.

5. Système de communication portable capable d'informer une personne qu'il ou elle peut accéder à un WLAN, ledit système comprenant un terminal de données mobile et un terminal de radiotéléphonie, dans lequel ledit terminal de données mobile (3) est associé avec ou intègre, d'un côté, un récepteur radioélectrique qui est conçu et susceptible de recevoir des signaux radioélectriques d'identité ou de présence diffusés par un ou le point d'accès radioélectrique (5) du WLAN (2) concerné et, de l'autre côté, un émetteur radioélectrique à courte portée, **caractérisé en ce que** le terminal de données mobile est capable d'émette, par le biais de l'émetteur radioélectrique à courte portée, un signal ou un message en vue d'informer ladite personne (1) qu'il ou elle peut accéder audit WLAN (2) alors que ledit terminal de radiotéléphonie (4) est équipé d'un récepteur conçu pour recevoir le signal ou le message émis par ledit émetteur à courte portée dudit terminal de données mobile (3), ledit terminal de données mobile étant conçu rechercher par balayage un WLAN disponible en se basant sur la détection d'un ou de l'identifiant de réseau diffusé par le ou un WLAN (2) auquel la personne concernée est abonnée.

6. Système selon la revendication 5, conçu pour exécuter les étapes du procédé défini dans les revendications 1 à 4.
